## Europäisches Patentamt
## European Patent Office
## Office européen des brevets

(11) Publication number: **0 062 458**
**B2**

(12) **NEW EUROPEAN PATENT SPECIFICATION**

(45) Date of publication of the new patent specification: **19.11.87**

(21) Application number: **82301573.0**

(22) Date of filing: **25.03.82**

(51) Int. Cl.⁴: **B 60 K 41/02**

(54) **Motor vehicle transmission apparatus.**

(30) Priority: **04.04.81 JP 50818/81**

(43) Date of publication of application:
**13.10.82 Bulletin 82/41**

(45) Publication of the grant of the patent:
**24.10.84 Bulletin 84/43**

(45) Mention of the opposition decision:
**19.11.87 Bulletin 87/47**

(84) Designated Contracting States:
**DE FR GB**

(56) References cited:
DE-A-2 833 641
DE-A-2 844 665
DE-C- 553 675
US-A-2 344 399

PATENT ABSTRACTS OF JAPAN, unexamined applications, field M, vol. 4, no. 37, march 27, 1980, THE PATENT OFFICE JAPANESE GOVERNMENT, page 25

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Nishikawa, Masao**
**912-1, Oizumigakuen-cho**
**Nerima-ku Tokyo (JP)**
Inventor: **Hattori, Torao**
**1-13-28, Shirako**
**Wako-shi Saitama-ken (JP)**
Inventor: **Aoki, Tasashi**
**15-51-514, Honcho**
**Wako-shi Saitama-ken (JP)**
Inventor: **Yoshizawa, Hiroshi**
**437, Komabayashi**
**Kamifukuoka-shi Saitama-ken (JP)**

(74) Representative: **MacFarlane, John Anthony Christopher et al**
**HASELTINE LAKE & CO. Hazlitt House**
**28 Southampton Buildings Chancery Lane**
**London WC2A 1AT (GB)**

EP 0 062 458 B2

## Description

This invention relates to a fully-automatic or semi-automatic motor vehicle transmission apparatus including a torque convertor and a transmission mechanism having a coupling member that is operated to couple the torque convertor to the transmission mechanism by a changeover operation of a control lever, this lever being moved from a neutral position, the apparatus being interposed in a system line for transmitting an output torque from an internal combustion engine to driving wheels of a vehicle. In such a transmission apparatus it is usual that with the control lever in a drive position the output torque of the engine, during operation of the engine, is always transmitted to the transmission mechanism through the torque convertor even under idling operation of the engine. This has the result with the engine idling and the operation lever in a drive position, so-called "creep" of the vehicle takes place. The load caused by this creep phenomenon places a considerable burden on the engine under idling operation and as a result the idling rotational speed of the engine is lowered. The difference can be, for example, about 200 r.p.m., between the idling speed of the engine under the condition that the operation lever is in its neutral position and the idling speed under the condition that the operation lever is in a drive position. This causes the following problems.

The first problem is that, since it is very difficult to set a resonance point of an engine mount so as not to generate individual resonances at both the above-mentioned two different idling speeds, it has been usual that the resonance point is so set as to correspond to the idling speed at the neutral position (at which the idling operation of the engine is carried out most frequently), with the result that when the control lever is set in a drive position sound reverberation and vibrations of the vehicle body take place.

The second problem is that the open degree of the throttle valve at idling has to be set sufficiently large that under the condition that the control lever is in drive position the lowered idling speed is still sufficiently high for reasons such as maintaining a charge and discharge balance in the vehicle electrical system and other reasons. This has the result that the idling speed in the neutral position of the changeover lever is unduly high, which is unfavourable from the point of view of fuel economy.

It has been proposed, in Japanese Unexamined Utility Model Publication Sho 54(12979)-139171, to provide a coupling-preventive mechanism arranged to be operative when a throttle valve is at its engine idling position so that by this mechanism the coupling member (such as an oil pressure operated clutch) provided in the transmission mechanism is prevented from being placed in its coupling condition for as long as the engine is idling and even though the operation lever is moved from its neutral position. By this arrangement, generation of the creep phenomenon caused by a power transmission to the driving wheels during engine idling can be prevented.

However, although the creep phenomenon has disadvantages, it can be used advantageously, for example when starting the vehicle on a slope or when moving the vehicle a little so as to shorten the distance from the preceding vehicle especially in the case of traffic congestion. Accordingly, it is desirable that generation of the creep phenomenon should not be eliminated totally. Instead it should be possible to take advantage of this phenomenon when occasion demands and in DE—05 28 33 641 and DE—05 28 44 665 there are disclosed motor vehicle transmissions comprising a torque convertor and a coupling member arranged to be coupled to transmit output torque of an internal combustion engine to a driving wheel of the vehicle by changeover operation of an operation lever from a neutral position of the lever, and a coupling-preventive mechanism arranged to be operated when a throttle valve of the engine is in its engine idling open position to prevent coupling operation of the coupling member, the coupling-preventive mechanism being provided with a change-over mechanism operable from a driver's seat for changing-over the coupling-preventive mechanism from a normal condition in which this mechanism is inoperable. In these transmissions creep is normally prevented, but can be obtained when desired, but the problem remains that when the creep phenomenon is utilised the engine speed drops giving the unfavourable results discussed above.

According to the present invention there is provided a motor vehicle transmission comprising a torque convertor, a coupling member arranged to be coupled to transmit output torque of an internal combustion engine to a driving wheel of the vehicle by changeover operation of an operation lever from a neutral position of the lever, and a coupling-preventive mechanism arranged to be operated when the throttle valve of the engine is in its engine idling open position to prevent coupling operation of the coupling member and that is provided with a changeover mechanism operable from a driver's seat for changing-over the coupling-preventive mechanism from a normal condition in which this mechanism is operable, to a rest condition in which this mechanism is inoperable; characterised in that a valve open degree adjusting mechanism is provided that moves with the changeover mechanism so that when the changeover mechanism is changed over to its rest condition, the open degree of the throttle valve is slightly increased from a predetermined engine idling open degree by the action of the adjusting mechanism. In this transmission a higher idling speed is set when the creep phenomenon is utilised.

For a better understanding of the invention and to show how the same may be carried into effect, reference will now be made, by way of example, to the accompanying drawings, in which:—

Figure 1 is an outline diagram of a motor vehicle transmission apparatus,

Figure 2 is a schematic diagram of a motor vehicle transmission apparatus, and

Figures 3 and 4 are schematic diagrams of parts of modified forms of transmission apparatus.

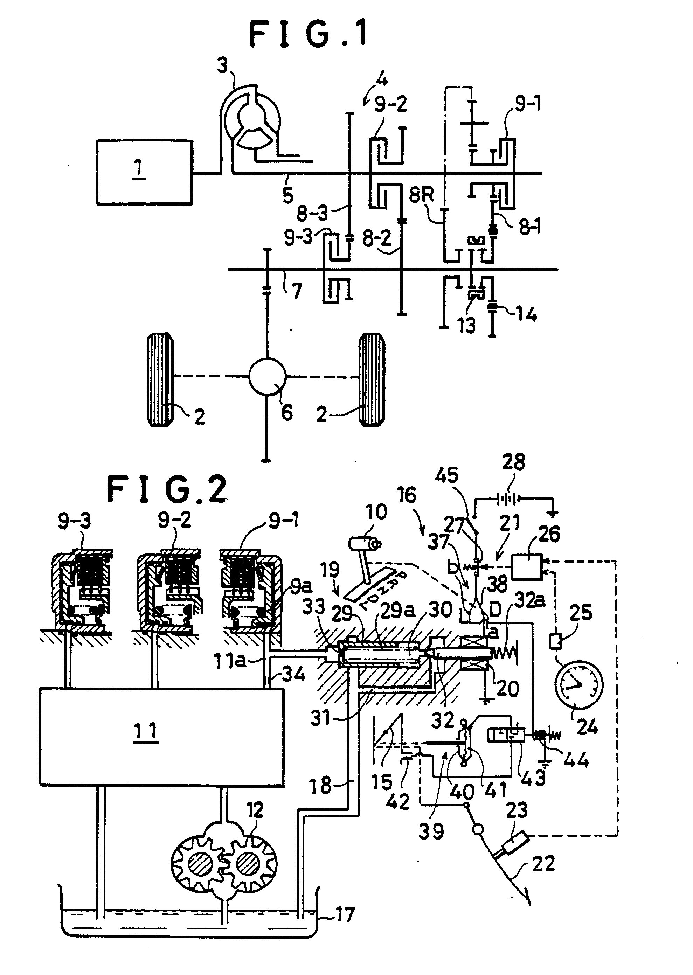

In Figure 1 numeral 1 denotes an internal combustion engine, and numeral 2 denotes driving wheels of the vehicle. The engine 1 and the wheels 2 are interconnected through a power transmission system line incorporating therein a torque convertor 3 and a transmission mechanism 4. The transmission mechanism 4 comprises respective gear trains 8-1, 8-2, 8-3, 8-R for three forward stages and one reverse stage, which are provided between an input shaft 5 connected to the torque convertor 3 and an output shaft 7 which is connected through a differential gear 6 to the driving wheels 2. A 1st speed oil pressure operated clutch 9-1 provided on the input shaft 5 and serving as a coupling member is interposed in the 1st speed gear train 8-1. A 2nd speed oil pressure operated clutch 9-2 provided on the input shaft 5 is interposed in the 2nd speed gear train 8-2. A 3rd speed oil pressure operated clutch 9-3 provided on the output shaft 7 is interposed in the 3rd speed gear train 8-3. These oil pressure operated clutches 9-1, 9-2, 9-3 are arranged to be selectively supplied with pressure oil from an oil pressure source 12 (Figure 2) through an oil pressure control means 11 having a manual valve arranged to be moved by an operation lever 10, so that vehicle running can be carried out at a speed selected from 1st, 2nd or 3rd speed by selective coupling of these oil pressure operated clutches 9-1, 9-2, 9-3.

The reverse gear train 8-R uses in common with the gear train 8-1 the 1st speed oil pressure operated clutch 9-1 as a coupling member, the 1st speed gear train 8-1 and the reverse gear train 8-R being arranged so that one or other is selectively established by a selector gear 13 arranged to be controlled in operation by the oil pressure control means 11, and additionally a one-way clutch 14 for permitting an over-rotation of the output shaft 7 side is interposed in the 1st speed gear train 8-1, so that there can be effected a smooth change speed from the 1st speed to the 2nd speed. The control lever 10 is so designed that it may be changed over freely to select any desired one of five different positions comprising an N position which is a neutral position, a D position for automatic speed-change, an L position for low speed running, an R position for reverse running, and a P position for parking.

When the control lever 10 is in the N or P position, pressure oil supply to the respective oil pressure operated clutches, 9-1, 9-2 and 9-3 is all stopped. When the lever 10 is in the D position, the pressure oil is supplied in order to each of the respective oil pressure operated clutches 9-1, 9-2 and 9-3 according to the vehicle speed and the throttle valve open degree, and thereby automatic speed-change controlled running utilising 1st, 2nd and 3rd speeds is permitted. When the lever 10 is in the L position, the pressure oil supply to the 3rd speed clutch 9-3 is stopped so that low-speed running in the 1st and 2nd speeds only is permitted. When the lever is in the R position, the pressure oil is supplied to the 1st speed clutch 9-1 and the selector gear 13 is shifted to the reverse driving side so that there is effected reverse driving.

The oil pressure control means 11 can be any suitable conventional construction and therefore no detailed description thereof will be given.

The 1st speed oil pressure operated clutch 9-1 which is to be coupled when pressure oil is supplied thereto by moving the control lever 10 from the N position to any of the D, L and R positions, is so arranged that such coupling during engine idling operation can be prevented by means of a coupling-preventive mechanism 16 which is operative when the throttle valve is in its engine idling condition. In detail, the coupling-preventive mechanism 16 comprises a valve mechanism 19 interposed in a drain passage 18 connecting the 1st speed oil pressure operated clutch 9-1 to a tank 17, an electromagnetic solenoid 20 which controls opening and closing of the valve mechanism 19, and a control circuit 21 controlling an electric current supply to the solenoid 20. The control circuit 21 comprises a throttle valve engine idling condition detector 23 which generates an output signal when the throttle valve 15 is located at its engine idling position in accordance with displacement of a throttle pedal 22, a vehicle near-stationary or stationary detector 25 which is operated by a speedometer 24 and generates an output signal when the vehicle is stationary or nearly stationary (for example, when the vehicle speed is extremely low, for instance 10 km/h or less it being difficult to detect only a vehicle totally stationary condition), an AND circuit 26 which receives the output signals from the two detectors 23 and 25, and a switching element 27 provided on the output side of the AND circuit. During engine idling operation in the vehicle near-stationary or stationary condition during which output signals from both the detectors 23 and 25 are emitted, the switching element 27 is closed, and consequently the electromagnetic solenoid 20 is connected to a battery 28, whereby the valve mechanism 19 is energised by an electric current flowing thereto and thus is given a valve open operation, permitting the pressure oil to drain off into the drain passage 18, whereby coupling of the 1st speed oil pressure operated clutch 9-1 is prevented.

The vehicle near-stationary or stationary detector 25 is provided lest the 1st speed oil pressure operated clutch 9-1 should be released from coupling when the throttle pedal 22 is returned to its idle position for obtaining an engine brake operation during vehicle running. When the one-way clutch 14 is interposed in the 1st speed gear train 8-1 as in the transmission mechanism 4 shown in Figure 1, no engine braking effect can be obtained so that, in this case, the detector 25 may be omitted and it is enough that the switching element 27 is opened and closed only by the presence or absence of the output signal from the detector 23 that detects the throttle valve engine idling condition.

Although in the illustrated embodiment the drain passage 18 is branched off from an oil supply passage 11a provided on the outlet side of the oil pressure control means 11 connected to the 1st speed oil pressure operated clutch 9-1, it could be branched off, for instance, from the inlet side of the oil pressure control apparatus 11 connected to the oil pressure source 12.

Furthermore, the valve mechanism 19 interposed in the drain passage 18 can take various forms. For instance, as shown in Figure 2, the valve mechanism 19 can consist of a relief valve 29 interposed in the drain passage 18 and a control valve 32 interposed in a by-pass 31 connecting between a pressure receiving chamber 30 located behind the relief valve 29 and the downstream side of the drain passage 18. In this form the control valve 32 is arranged to be moved with the electromagnetic solenoid 20 and the pressure-receiving chamber 30 is connected, through an orifice 33 in the relief valve 29, to the upstream side of the drain passage 18, so that when the control valve 32 is moved to open against the action of a spring 32a by the energisation of the electromagnetic solenoid 20, the pressure oil is allowed to flow from the upstream side of the drain passage 18 to the by-pass 31 through the orifice 33, whereupon the relief valve 29 is pushed backward to open against the action of the spring 29a due to a pressure difference between the oil pressure on the upstream side and that in the pressure-receiving chamber 30, so that the oil pressure in the upstream side, that is, the oil pressure in the 1st speed clutch 9-1 is lowered to a predetermined set pressure level predetermined by the force of the spring 29a. The set pressure level is as low as about 0.5 Bar (0.5 kp/cm²), for example, and this is not so high as to cause the 1st speed clutch 9-1 to couple against the force of the return spring 9a built therein.

When an electric current supply to the electromagnetic solenoid 20 is cut off, the control valve 32 is closed by the spring 32a and the relief valve 29 is pushed to move to the closing side by the force of the spring 29a. In this case the valve moving speed is comparatively low due to the viscous resistance of the oil flowing through the orifice 33, so that the supply oil pressure to the 1st speed clutch 9-1 is gradually increased and thus a smooth coupling thereof results, and thus no shock is brought about at the time of starting of the vehicle.

Referring to the drawings, numeral 34 denotes an orifice interposed in the oil supply passage 11a and which serves to prevent that, when the drain passage 18 is opened, the delivery pressure of the oil pressure source 12 is so lowered that the torque convertor 3 cannot be filled fully with the oil. The orifice 34 also serves to provide, in its cooperation with the slow closing movement of the relief valve 29, a shock absorbing effect when the 1st speed clutch 9-1 is coupled.

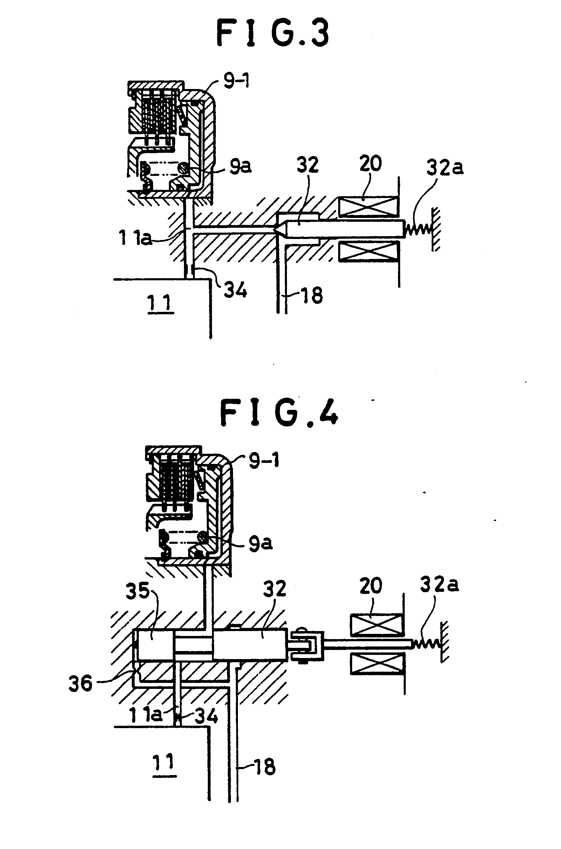

The valve mechanism 19 may be constructed in such a manner that the relief valve 29 is eliminated and instead the control valve 32 is directly interposed in the drain passage 18 as shown in Figure 3, or an auxiliary control valve 35 which is to close the oil supply passage 11a when the control valve 32 is opened may be formed into a construction united with the control valve 32 as shown in Figure 4, in order to prevent a possible delivery pressure drop of the oil pressure source 12 that could otherwise occur when the drain passage 18 is opened. Referring to Figure 4, numeral 36 denotes another orifice which is so provided as to take advantage of viscous resistance of the oil which is being pushed out into the drain passage 18 by the auxiliary control valve 35 and thereby cause the moving speed of the control valve 32 to lower when the valve 32 is being moved to close.

The coupling-preventing mechanism 16 is equipped with a changeover mechanism 37 which is operable from a driver's seat so that the preventive mechanism 16 may be changed over from its normal condition, in which it is able to operate, to a rest condition in which it is held inoperative.

The changeover mechanism 37 may consist of, for example and as illustrated in Figure 2, a changeover switch 38 which is interposed, in series with the switching element 27, in a circuit connecting between the electromagnetic solenoid 20 and the battery 28. The switch 28 can be arranged to be moved with, for example, the operation lever 10, so that when the operation lever 10 is changed over to its L position, the switch 38 is changed over from a contact point a which is a normally closed condition, or is a closed condition in which it is placed when the control lever 10 is at its D or R position, to a contact point b which is a normally open position in which the current to the electromagnetic solenoid 20 is cut off. When the switch 38 is on the contact point a the coupling-preventive mechanism 16 is able to operate. When the switch 38 is on the contact point b the mechanism 16 is in its rest condition, that is it is held inoperative.

It is of course possible that the changeover mechanism 37 may also be so arranged so to be operable, independently of the control lever 10, by a control means other than the control lever 10.

In the illustrated embodiment there is additionally provided a valve open degree adjusting mechanism 39 arranged to be moved with the changeover mechanism 37 so that the open degree of the throttle valve 15 is slightly increased from its normal engine idling open degree when the changeover mechanism 37 is changed over to its rest condition, that is, when the changeover switch 38 is changed over to the normally open contact point b. In more detail, the adjusting mechanism 39 comprises a diaphragm 40 coupled to the throttle valve 15 and an electromagnetic changeover valve 43 which causes a pressure chamber 41 for control of the diaphragm 40 to communicate selectively with the atmosphere or with a negative pressure port 42 provided in the neighbourhood of the valve 15. An operation solenoid 44 for operating the changeover valve 43 is connected to the normally open contact point b of the changeover switch 38 so that when the switch 38 is changed over to the normally open contact point b, the operation solenoid 33 is energized and the changeover valve 43 is operated to connect the pressure chamber 41 to the negative pressure port 42. As a result the open degree of the throttle valve 15 is slightly increased by means of the diaphragm 40.

In Figure 2, numeral 45 denotes a power switch arranged to move with an ignition key operated switch.

Now, the operation of the apparatus will be explained as follows:—

If the operation lever 10 is changed over to the D or R position during the time when the engine is in an idling condition with the throttle valve 15 open at its engine idling open degree, the pressure oil is supplied to the oil supply passage 11a through the oil pressure control means 11. On this occasion, the coupling-preventive mechanism 16 is in its operable condition, and consequently it is operated, in the manner described above, by the output signal from the engine idling open degree detector 23, whereupon the pressure oil is leaked into the drain passage 18 and this prevents the 1st speed clutch 9-1 from coupling, so that there takes place no creep phenomenon and substantially the same idling operation of the engine takes place as the idling operation thereof that takes place when the control lever 10 is set in the N position.

When, from the above condition, the throttle pedal 22 is pressed to run the vehicle, the engine idling open degree detector 23 ceases to generate its output signal, the coupling-preventive mechanism 16 ceases to operate, and the 1st speed clutch 9-1 is supplied with the pressure oil to be coupled and thereby the output torque of the engine 1 is transmitted to the driving wheels 2 for running the vehicle.

When the control lever 10 is shifted to the L position, the coupling-preventive mechanism 16 is changed over, by means of the change-over mechanism 37, to the rest position at which it is inoperable, so that the coupling-preventive mechanism 16 cannot be operated even during engine idling operation and in this condition the 1st speed clutch 9-1 is coupled, so that the creep phenomenon can be conveniently using for starting the vehicle on a slope or advancing the same a little from the stopped condition to narrow the distance between the vehicle and a preceding vehicle.

On this occasion, the throttle valve 15 is slightly increased in its open degree from its predetermined engine idling open degree by the valve open degree adjusting mechanism 39, and thereby a lowering in engine idling speed that would otherwise be caused by a load increase resulting from the creep phenomenon can be prevented.

If the valve open degree adjusting mechanism 39 were not provided, there would be brought about a vibration of the engine mount resulting from the lowering in the engine idling speed caused by the creep phenomenon.

It should be understood that the coupling-preventive mechanism 16, the changeover mechanism 37 and the valve open degree adjusting mechanism 39 need not be electrically operated and controlled mechanisms. One, two or all three could be mechanically operated and controlled. It should also be understood that the transmission apparatus could be a semi-automatic transmission apparatus in which the transmission mechanism 4 is manually shifted by the control lever 10.

Although the L position has been described, as selecting an automatic speed-change range covering the 1st and 2nd speeds, it could be one covering the 1st or the 2nd speed only. The construction for preventing the creep phenomenon described is effective also in the R position but such a modification can be considered that the contact point a is so arranged as not to be closed in the R position so that the creep phenomenon can be utilized in the R position.

## Claims

1. A motor vehicle transmisson comprising a torque convertor (3), a coupling member (9-1) arranged to be coupled to transmit output torque of an internal combustion engine (1) to a driving wheel (2) of the vehicle by changeover operation of an operation lever (10) from a neutral position of the lever, and a coupling-preventive mechanism (16) arranged to be operated when the throttle valve (15) of the engine is in its engine idling open position to prevent coupling operation of the coupling member and that is provided with a changeover mechanism (37) operable from a driver's seat for changing over the coupling-preventive mechanism (16) from a normal condition in which this mechanism (16) is operable, to a rest condition in which this mechanism (16) is inoperable; characterised in that a valve open degree adjusting mechanism (39) is provided that moves with the changeover mechanism (37) so that when the changeover mechanism (37) is changed over to its rest condition, the open degree of the throttle valve (15) is slightly increased from a predetermined engine idling open degree by the action of the adjusting mechanism (39).

2. An apparatus as claimed in claim 1, wherein the operation lever (10) is movable between at least two positions each of them effecting coupling of the coupling member (9-1), and wherein the changeover mechanism (37) is operated to change over in conjunction with changeover operation of the operation lever (10) between each of these two positions.

3. An apparatus as claimed in claim 2, wherein the two positions are a drive position (D) in which automatic speed changes can take place throughout a full range of speeds provided by the transmission apparatus, and a low speed position (L); and wherein the coupling-preventive mechanism (16) is in its normal condition when the operating lever (10) is the drive position (D).

4. An apparatus as claimed in claim 1, wherein the changeover mechanism (37) is operable independently of the operation lever (10).

## Patentansprüche

1. Kraftübertragung für Motorfahrzeug mit einem Drehmomentwandler (3), einem Kuppelglied (9-1), welches so angeordnet ist, daß es bei einer Stellungsänderung eines Bedienungshebels (10) aus einer neutralen Stellung des Hebels so gekuppelt wird, daß von einer Brennkraftmaschine (1) ein Ausgangsdrehmoment auf ein Antriebsrad (2) des Fahrzeugs übertragen wird, und einem ein Einkuppeln verhindernden Mechanismus (16), der so angeordnet ist, daß er dann, wenn eine Drosselklappe (15) der Brennkraftmaschine sich in ihrer Leerlaufstellung für die Brennkraftmaschine befindet, so betätigt wird, daß er den Einkuppelvorgang des Kuppelgliedes verhindert, und der mit einem vom Fahrersitz aus betätigbaren Umschaltmechanismus (37) zum Umschalten des das Einkuppeln verhindernden Mechanismus (16) aus einem Normalzustand, in welchem dieser Mechanismus (16) betätigbar ist, in einen Ruhezustand, in welchem dieser Mechanismus (16) nicht betätigbar ist, ausgestattet ist, dadurch gekennzeichnet, daß ein das Ausmaß der Aufsteuerung der Drosselklappe einstellender Mechanismus (39) vorgesehen ist, welcher mit dem Umschaltmechanismus (37) so bewegt wird, daß beim Umschalten des Umschaltmechanismus (37) in seinen Ruhezustand der Aufsteuerungsgrad der Drosselklappe (15) durch die Wirkung des Einstellmechanismus (39) ausgehend von einem vorbestimmten Aufsteuerungszustand der leerlaufenden Brennkraftmaschine geringfügig erhöht wird.

2. Vorrichtung nach Anspruch 1, worin der Bedienungshebel (10) zwischen zumindest zwei Stellungen bewegbar ist, von welchen jede ein Einkuppeln des Kuppelgliedes (9-1) bewirkt, und worin der Umschaltmechanismus (37) betätigt wird um im Zusammenhang mit dem Umschaltvorgang des Bedienungshebels (10) zwischen diesen zwei Stellungen umzuschalten.

3. Vorrichtung nach Anspruch 2, worin die zwei Stellungen eine Antriebsstellung (D), in welcher über den durch die Kraftübertragungseinrichtung geschaffenen vollen Bereich von Gangänderungen eine automatische Gangänderung möglich ist, und eine Stellung (L) für niedrige Gänge sind und worin der das Einkuppeln verhindernde Mechanismus (16) dann in seinem Normalzustand ist, wenn sich der Bedienungshebel (10) in der Antriebsstellung (D) befindet.

4. Vorrichtung nach Anspruch 1, worin der Umschaltmechanismus (37) unabhängig vom Bedienungshebel (10) betätigbar ist.

## Revendications

1. Transmission de véhicule automobile comprenant un convertisseur de couple (3), un organe d'accouplement (9-1) agencé pour être accouplé afin de transmettre le couple de sortie d'un moteur à combustion interne (1) à une roue motrice (2) du véhicule par opération de changement d'état d'un levier de commande (10) à partir d'une position de point mort du levier, et un mécanisme de prévention d'accouplement (16) agencé pour être mis en action quand le papillon des gaz (15) du moteur est dans sa position ouverte de marche au ralenti du moteur afin d'empêcher l'établissement de l'accouplement par l'organe d'accouplement et qui est muni d'un mécanisme de changement d'état (37) sur lequel on peut agir depuis le siège du conducteur pour faire passer le mécanisme de prévention d'accouplement (16) d'un état normal dans lequel ce mécanisme (16) peut agir dans un état de repos dans lequel ce mécanisme (16) ne peut pas agir, caractérisé en ce qu'il est prévu un mécanisme de réglage de degré d'ouverture du papillon (39) qui se déplace avec le mécanisme de changement d'état (37), de sorte que lorsque celui-ci est mis dans son étant de repos, le degré d'ouverture du papillon des gaz (15) est légèrement augmenté à partir d'un degré d'ouverture déterminé de marche du moteur au ralenti sous l'action du mécanisme de réglage (39).

2. Transmission selon la revendication 1, dans laquelle le levier de commande (10) est mobile entre au moins deux positions assurant chacune l'accouplement de l'organe d'accouplement (9-1), et dans laquelle le mécanisme de changement d'état (37) est manoeuvré pour assurer un changement d'état conjointement avec la manoeuvre de changement d'état du levier de commande (10) entre chacune de ces deux positions.

3. Transmission selon la revendication 2, dans laquelle les deux positions sont une position de marche (D) pour laquelle des changements de vitesse automatiques peuvent avoir lieu dans toute la gamme de vitesses offertes par la transmission, et une position de vitesse faible (L); et dans laquelle le mécanisme de prévention d'accouplement (16) est dans son état normal quand le levier de commande (10) est dans la position de marche (D).

4. Transmission selon la revendication 1, dans laquelle le mécanisme de changement d'état (37) est manoeuvrable indépendamment du levier de commande (10).

# F I G . 1

# F I G . 2

# FIG.3

# FIG.4